# EUROPÄISCHE PATENTSCHRIFT

(11) **EP 0 375 833 B1**
(45) Veröffentlichungstag und Bekanntmachung des Hinweises auf die Patenterteilung: **10.02.1993**
(21) Anmeldenummer: 89112409.1
(22) Anmeldetag: 07.07.1989
(51) Int. Cl.: B42D 15/10, G06K 19/08, B42D 209/00

(54) **Optisch variables Flächenmuster**
Optically variable planar pattern
Modèle horizontal optiquement variable

(30) Priorität: 12.12.1988 CH 4576/88
(43) Veröffentlichungstag der Anmeldung: 04.07.1990
(73) Patentinhaber: Landis & Gyr Technology Innovation AG, 6301 Zug (CH)
(72) Erfinder: Antes, Gregor, CH-8044 Zürich (CH)
(74) Vertreter: Müller, Hans-Jürgen, Dipl.-Ing.

(56) Entgegenhaltungen:
- EP-A- 0 105 099
- EP-A- 0 146 151
- GB-A- 2 126 949

## Beschreibung

Die Erfindung bezieht sich auf ein optisch variables Flächenmuster der im Oberbegriff des Anspruchs 1 genannten Art.

Solche optisch variable Flächenmuster mit einer mikroskopischen Reliefstruktur eignen sich beispielsweise zur Erhöhung der Fälschungssicherheit und der auffälligen Kennzeichnung von Gegenständen aller Art und sind insbesondere bei Wertpapieren, Ausweisen, Zahlungsmitteln und ähnlichen zu sichernden Gegenständen verwendbar.

Die eingeprägten Reliefstrukturen mit einem optisch wirksamen Ueberzug verursachen Beugung des auf die Struktur einfallenden Lichtes. Die Beugungseigenschaften dieser Reliefstrukturen werden unter anderem durch die Spatialfrequenz, d. h. die Anzahl Linien pro mm, durch die Profilform der Reliefstruktur und durch die Amplitude oder Höhenunterschiede in der Reliefstruktur sowie durch die azimutale Orientierung der Reliefstruktur auf dem zu sichernden Gegenstand bestimmt.

Die Reliefstrukturen weisen z. B. Querschnittsformen bekannter periodischer Funktionen auf mit den für die Beugung von sichtbarem Licht wirksamen Spatialfrequenzen von mehr als 10 Linien pro mm. Herstellungsbedingte Grenzen beschränken den praktisch nutzbaren Bereich auf etwa 5000 Linien/mm. Aber auch Querschnittsformen mit aperiodischen Funktionen, die lokal ein Spatialfrequenzgemisch aus diesem Bereich enthalten, wie z. B. Mattstrukturen, sind anwendbar. Der Höhenunterschied dieser Reliefstrukturen ist typisch zwischen 50 nm und 10'000 nm gewählt.

Die Beugungseigenschaften der verschiedenen Reliefstrukturen sind z. B. in R. Petit, Electromagnetic Theory of Gratings, Springer Verlag, Berlin Heidelberg New York 1980, beschrieben.

Diese Strukturen lassen sich beispielsweise kostengünstig durch Verformen einer thermoplastischen Kunststoffschicht mit einem heizbaren Prägestempel herstellen, der dabei das reliefartige, von einer Masterstruktur galvanisch abgeformte Negativ des Sicherheitselements trägt, wie dies aus der CH-PS 594 936 bekannt ist.

Ein Flächenmuster der im Oberbegriff des Anspruchs 1 genannten Art sowie eine andere Methode zur Herstellung der Masterstruktur für den Prägestempel derartiger Flächenmuster sind in der CH-Anmeldung 00805/88-4 beschrieben.

Andererseits sind Hologramme zur Erzeugung eines dreidimensionalen Bildeindrucks bekannt. Die optische, jeden Punkt eines holographisch registrierten, diffus reflektierenden Objektes betreffende Information ist über die ganze aktive Fläche des Hologramms verteilt, so dass eine Verkleinerung der Hologrammfläche den sichtbaren Bildteil nur unwesentlich verkleinert, jedoch den nutzbaren Blickwinkelbereich reduziert.

Ein Verfahren zur Gewinnung einer Reliefstruktur aus einem Hologramm ist in US-PS 4 094 575 beschrieben. Diese Reliefstruktur ist in eine Kunststoffolie einprägbar und vervielfältigbar. Solche Strukturen sind bei Beleuchtung mittels flächenhafter Leuchten, wie z. B. Fluoreszenzleuchten, nur schwer erkennbar.

Der Erfindung liegt die Aufgabe zugrunde, ein schwer kopierbares, sich auf vorbestimmte Art änderndes lichtmodifizierendes Flächenmuster mit wenigstens zwei verschiedenen graphisch gestalteten Darstellungen zu schaffen, die unter verschiedenen Betrachtungswinkeln sichtbar sind, und dessen Echtheit bei normaler Beleuchtung mit Tages- oder Kunstlicht auch von Nichtfachleuten optisch erkennbar ist.

Die Erfindung ist im Anspruch 1 gekennzeichnet. Weiterbildungen der Erfindung ergeben sich aus den Unteransprüchen.

Nachfolgend werden Ausführungsbeispiele der Erfindung anhand der Zeichnung näher erläutert.

Es zeigt:
- Fig. 1: ein Flächenmuster mit einer graphischen Darstellung, die in Teilflächen und Rasterfelder eingeteilt ist, und
- Fig. 2: den Aufbau eines Rasterfeldes im Detail und die Beugung von einfallendem Licht an einem Beugungselement.

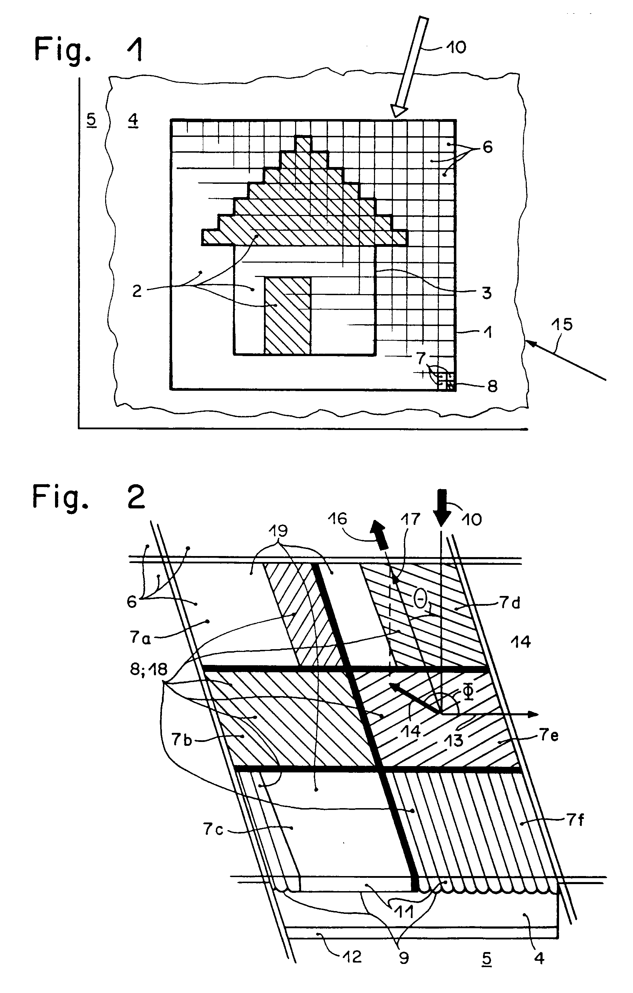

In der Figur 1 bedeutet 1 eine beliebig geformte Begrenzung eines Flächenmusters, 2 verschiedene Teilflächen einer graphisch gestalteten Darstellung, 3, 4 einen Träger des Flächenmusters, 5 einen Gegenstand, der ein Flächenmuster als Sicherheitselement aufweist, 6 mehrere Rasterfelder, 7 verschiedene Feldanteile des Rasterfeldes 6 und 8 ein Beugungselement.

In der beispielhaft gezeigten Ausführung ist ein Haus aus den drei Teilflächen 2, dem Dach, der Wand und der Tür, und ein Hintergrund mittels einer vierten Teilfläche 2 dargestellt. Jede Teilfläche 2 ist in Rasterfelder 6 eingeteilt, wobei Grenzen zwischen den Teilflächen 2 und die Begrenzung 1 stückweise aus den Grenzen der Rasterfelder 6 zusammengesetzt sind. Vorteilhaft weisen alle Teilflächen 2 gleich grosse Rasterfelder 6 auf.

Das Flächenmuster kann beispielsweise nur ein Teil eines grösseren graphisch gestalteten, in einer anderen Technik erstellten Motivs sein. Die Begrenzung 1 ist wenigstens teilweise von diesem Motiv umgeben. Die nicht zum Flächenmuster gehörigen Teile des Motivs sind beispielsweise nach dem aus der CH-Anmeldung 00 805/88-4 bekannten Verfahren hergestellt oder mittels eines konventionellen Druckverfahrens gestaltet.

Das ganze Flächenmuster ist aus M Rasterfeldern 6 zusammengesetzt, wobei M wenigstens den Wert zwei aufweist. Für graphisch anspruchsvolle Flächenmuster ist ein durch die Berandung 1 begrenztes Feld in eine grosse Anzahl von Rasterfelder 6 zu unterteilen, damit die Rasterfelder 6 vom unbewaffneten Auge in der normalen Sehdistanz von etwa 30 cm nicht mehr als störend wahrgenommen werden.

In einem Beispiel sind alle M Rasterfelder 6 gleich gross. Sie bedecken die Fläche innerhalb der Berandung 1 und weisen Kreisform oder die Form eines regelmässigen Vielecks auf, wobei der Durchmesser oder eine grösste Diagonale weniger als 0,3 mm beträgt. Eine quadratische Zeichnung von 12 mm Seitenlänge weist daher für M einen Wert von mehr als 1600 auf.

Jedes Rasterfeld 6 ist in wenigstens zwei Feldanteile 7 eingeteilt, die in der Figur 2 mit 7a bis 7f bezeichnet sind. Vorteilhaft ist als Form der Rasterfelder 6 ein regelmässiges Vieleck verwendbar, da diese Vielecke leicht flächendeckend in regelmässige, andere Vielecke der Feldanteile 7 unterteilbar sind. Gut geeignet sind Drei-, Vier- oder Sechsecke.

Jeder Feldanteil 7 enthält ein optisch aktives Beugungselement 8, das eine mikroskopische Reliefstruktur 9 mit einer Spatialfrequenz von mehr als 100 Linien pro mm aufweist. Das Beugungselement 8 beugt einfallendes Licht 10 auf eine durch die Reliefstruktur 9 vorbestimmte Art.

Aus zeichnerischen Gründen ist in der Figur 2 die eine der Schmalseiten des zentralen Rasterfeldes 6, das in sechs Feldanteile 7a bis 7f eingeteilt ist, als Schnittfläche gezeichnet, um den Aufbau des Trägers 4 zu zeigen. Ebenso sind zum besseren Verständnis die Rasterfelder 6 mit einer doppelt gezogenen Trennlinie und die Einteilung der Feldanteile 7a bis 7f mit einer dick ausgezogenen Linie angedeutet. In Wirklichkeit sind die Einteilungen nur durch die verschiedenen Reliefstrukturen 9 bestimmt.

Die Reliefstrukturen 9 des Flächenmusters werden mit einem Prägestempel in den Träger 4 geprägt und anschliessend mit einer Schutzschicht 11 überzogen, Eine zwischen der Schutzschicht 11 und der in den Träger 4 geprägten Reliefstruktur 9 vorhandene, optisch wirksame Zwischenschicht bestimmt die Betrachtungsweise des Flächenmusters:
Das Flächenmuster ist in Transmission betrachtbar, wenn die Schutzschicht 11 und der Träger 4 aus optisch transparenten Materialien bestehen, die einen unterschiedlichen Brechungsindex aufweisen. Der beim Uebergang von der Schutzschicht 11 in den Träger 4 vorhandene Sprung der Brechungsindices wirkt als eine optisch wirksame Zwischenschicht.

Ist die optisch wirksame Schicht eine vor oder nach dem Prägen auf dem Träger aufgebrachte, dünne reflektierende Metallschicht, z. B. aus Aluminium, Gold, Nickel, Silber usw., dann ist das Flächenmuster in Reflexion durch die Schutzschicht 11 betrachtbar. Die Beugungselemente 8 reflektieren das einfallende Licht 10, das durch die Beugung modifiziert wurde, mit grosser Intensität.

Der Träger 4 kann auch auf nicht transparenten Gegenständen 5 befestigt werden und ist daher vielseitig verwendbar. Beispielsweise kann der Träger 4 auf der nicht geprägten Seite mit einer Klebeschicht 12 ausgerüstet und als selbstklebende Etikette auf den zu sichernden Gegenstand 5 aufgeklebt werden. Beim Versuch, den Träger 4 vom Gegenstand 5 zu trennen, verformen die Adhäsionskräfte der Klebeschicht 12 den Träger 4 mit den Reliefstrukturen 9 und zerstören dadurch das Flächenmuster.

Das Flächenmuster weist eine Referenzrichtung 13 in der Ebene des Trägers 4 auf. Relativ zur Referenzrichtung 13 ist die Orientierungrichtung 14 jeder Reliefstruktur 9 durch einen Azimutwinkel Φ zwischen den beiden Richtungen 13 und 14 bestimmbar.

Beim Entwurf des Flächenmusters wird seine Gesamtfläche in M Rasterfelder 6 aufgeteilt, wobei jedes Rasterfeld 6 seinerseits N Feldanteile 7a bis 7f aufweist. Die beiden Zahlen M und N sind ganz und grösser als 1.

Das Flächenmuster enthält N Darstellungen 3, wobei eine davon in der Figur 1 gezeigt ist. Jede der N Darstellungen wird in M Rasterflächen oder Pixel entsprechend der Einteilung der Rasterflächen 6 aufgeteilt. Jede der N Darstellungen ordnet einem der N Feldanteile 7a bis 7f das dem Rasterfeld 6 entsprechende Pixel zu. Jeder Pixel weist als Parameter einen Farbwert und einen Helligkeitswert für die Flächenhelligkeit auf.

Die Richtung des auf das Flächenmuster einfallenden Lichtes 10 (Fig. 2) und eine für die Darstellung 3 vorgesehene Betrachtungsrichtung 15, die auf die Orientierungsrichtung 14 bezogen ist, und der Farbwert des Pixels bestimmen die wichtigen Parameter der Reliefstruktur 9 des dem betreffenden Pixel zugeordneten Beugungselementes 8.

Sofern die Reliefstrukturen 9 einfache geradlinige Beugungsgitter sind, genügen als Parameter der Reliefstrukturen 9 die Spatialfrequenz, der Azimutwinkel Φ und das Reliefprofil. Die Spatialfrequenz und die Wellenlänge des Lichtes 10 bestimmen den Beugungswinkel ϑ.

Asymmetrische Reliefprofile sind besonders vorteilhaft, da bei geeigneter Dimensionierung des Profils das aus bestimmten Richtungen einfallende Licht 10 an diesen Profilen entweder fast vollständig in eine vorbestimmte Raumrichtung 17 gebeugt wird oder ein bestimmtes, von 1:1 abweichendes Verhältnis zwischen den Intensitäten des in die plus erste und in die minus erste Beugungsordnung gebeugten Lichtes erreicht werden kann. Diese Eigenschaft asymmetrischer Reliefprofile ist z. B. in der bereits erwähnten Schrift von R. Petit, Electromagnetic Theory of Gratings, auf den Seiten 159ff beschrieben.

Die Raumrichtung 17 von gebeugtem Licht 16 ist durch den Azimutwinkel Φ und den Beugungswinkel ϑ bestimmt, wobei der Azimutwinkel Φ einen vorbestimmten Wert aus dem Bereich 0° bis 360° aufweist. Bei symmetrischen Profilen teilt sich senkrecht einfallendes Licht 10 gleichmässig auf die beiden möglichen Raumrichtungen 17 (ϑ, Φ und ϑ,Φ+180°) auf. Symmetrische Reliefprofile sind daran erkennbar, dass jede Darstellung 3 in zwei verschiedenen Betrachtungsrichtungen 15 sichtbar ist. Bei geeignet dimensionierten asymmetrischen Profilen hingegen ist jede der N Darstellungen 3 nur in einer einzigen Betrachtungsrichtung 15 sichtbar. Ein Flächenmuster, das sowohl symmetrische wie asymmetrische Profilarten aufweist, ist zwar aufwendiger in der Herstellung, aber ergibt besonders auffällige optische Effekte.

Die Spatialfrequenz kann innerhalb eines Beugungselementes 8 mit einer vorbestimmten Spatialfrequenzamplitude A moduliert sein, so dass sich das gebeugte Licht 16 in einen durch die Amplitude A vorbestimmten Bereich des Beugungswinkels ϑ auffächert. Dies ist besonders vorteilhaft, wenn der Träger 4 sehr dünn und der Gegenstand 5 nicht ganz flach ist, wie z B. das Papier einer zerknitterten Banknote. Das Flächenmuster bleibt trotz der Unebenheiten leicht sichtbar, da ein Teil des gebeugten Lichtes 16 im Bereich des Beugungswinkels ϑ in die Betrachtungsrichtung 15 fällt und so die Unebenheit des Trägers 4 ausgleicht.

Die bei der vorbestimmten Richtung des einfallenden Lichtes 10 und der Beobachtungsrichtung 15 darzustellenden Helligkeitswerte der einer Rasterfläche 6 zugeordneten N Pixel legen die relative Grösse der N Flächenanteile 7a bis 7f oder, falls jede der Rasterflächen 6 fest in N Flächenanteile 7a bis 7f eingeteilt ist, einer Beugungsfläche 18 des Beugungselementes 8 in jedem der N Flächenanteile 7a bis 7f fest.

Das unter einem vorbestimmten Winkel ϑ gebeugte Licht 16 weist eine Intensität auf, die, abgesehen von den Beleuchtungs- und Betrachtungsbedingungen und der Profilform, von der wirksamen Beugungsfläche 18 des Beugungselementes 8 und dem Beugungswirkungsgrad der Reliefstruktur 9 abhängt.

Wird beispielsweise der Anteil der N Beugungsflächen 18 im Rasterfeld 6 durch den Helligkeitswert des Pixels jeder Darstellung 3 bestimmt, weisen die unter der vorbestimmten Richtung 15 betrachteten Rasterfelder 6 Unterschiede in ihren relativen Helligkeiten auf.

In einer anderen Ausführung sind die N Feldanteile 7a bis 7f gleich gross, jedoch werden die Reliefstrukturen 9 mit einer dem Helligkeitswert des Pixels zugeordneten Beugungswirkungsgrad vorbestimmt.

Jedem Rasterfeld 6 (Fig. 1) ist ein vorbestimmter Pixel aus jeder der N verschiedenen Darstellungen 3 zugeordnet. Jedes Rasterfeld 6 weist daher in jedem der N Feldanteile 7 ein Beugungselement 8 auf, das dem vorbestimmten Pixel dieser N Darstellungen 3 entspricht und dessen Reliefstruktur 9 und die Grösse der Beugungsfläche 18 durch die Parameter des Pixels vorbestimmt sind. Jedes Rasterfeld 6 enthält daher die ganze Information über den zugeordneten Pixel der N Darstellungen.

Da jeder der N verschiedenen Darstellungen 3 wenigstens eine ihr zugeordnete Betrachtungsrichtung 15 aufweist, sieht ein Betrachter des Flächenmusters bei nicht diffuser Beleuchtung unter einer der N Betrachtungsrichtungen 15 nur eine der N Darstellungen 3. Durch Kippen oder Drehen des Trägers 4 werden für den Betrachter nacheinander alle N Darstellungen 3 sichtbar.

In der Figur 2 beispielsweise ist N=6, weil das Flächenmuster sechs Darstellungen 3 enthält. Das Beugungselement 8, das dem Pixel der ersten Darstellung 3 entspricht, ist dem Feldanteil 7a zugeordnet. Der Feldanteil 7b ist für den Pixel der zweiten Darstellung 3 usw. bestimmt. Die N Feldanteile 7a bis 7f sind gleich gross. Die der relativen Helligkeit entsprechende Beugungsfläche 18 ist kleiner oder gleich der Fläche der Feldanteile 7a bis 7f. In der Figur 2 sind die Beugungsflächen 18 schraffiert wiedergegeben. Ein vom Beugungselement 8 nicht beanspruchter Flächenteil 19 der Feldanteile 7a, 7c und 7d ist völlig glatt und reflektiert das einfallende Licht 10. Da die Richtung des reflektierten Lichtes durch das Reflexionsgesetz bestimmt ist, ist dessen Richtung ebenfalls vorbestimmt und darf mit keiner der Betrachtungsrichtungen 15 zusammenfallen, da die Reflexion das Erkennen der Darstellung 3 stört.

Es ist möglich, in den Flächenteil 19 eine Mattstruktur einzuprägen, die das einfallende Licht 10 gleichmässig in alle Richtungen zerstreut und bei der Betrachtung einer der N Darstellungen 3 wegen der geringen Intensität nicht stört.

Die N Darstellungen 3 können verschiedene Perspektiven ein und desselben Objektes sein, wobei beispielsweise die Beobachtungsrichtungen der entsprechenden Ansichten des Objektes mit den N Betrachtungsrichtungen 15 zusammenfallen können. Durch Aendern der Betrachtungsrichtung 15, z. B. durch Drehen des Flächenmusters oder durch Bewegen des Kopfes, erhält man im Gegensatz zu einem Hologramm eine sich sprunghaft ändernde Ansicht des Objektes aus der entsprechenden Betrachtungsrichtung 15. Ist beispielsweise das Objekt ein menschliches Antlitz, wirkt das sich ändernde Objekt auf den Betrachter besonders auffällig.

In einer anderen Ausführung verändert sich unter den N Betrachtungsrichtungen 15 nur die Schattierung eines Objektes bei einer vorbestimmten Perspektive, wobei der Eindruck einer sich ändernden Beleuchtungsrichtung des Objektes entsteht.

Besonders gut eignen sich für die N Darstellungen 3, die den N Betrachtungsrichtungen 15 entsprechen, auch einzelne Ziffern, Buchstaben, Firmen-Logos, Teile von Texten usw., die der Betrachtungsrichtung 15 entsprechend beim Drehen des Flächenmusters für den Betrachter nacheinander sichtbar werden.

Bei der Anwendung des Flächenmusters auf einer Banknote eines mehrsprachigen Landes kann jede der N Darstellungen 3 z. B. den Wert der Note in Ziffern oder in Worten in einer der Landessprachen zeigen.

Die Betrachtungsrichtungen 15 können paarweise so geordnet sein, dass bei normalem Betrachtungsabstand die beiden Betrachtungsrichtungen 15 eines jeden Paares gerade mit den verlängerten Achsen der beiden auf das Flächenmuster gerichteten Augen des Betrachters zusammenfallen. Falls die unter den beiden Richtungen 15 sichtbaren Darstellungen 3 ein stereoskopisches Paar des gleichen Objektes bilden, gewinnt der Betrachter des Flächenmusters einen räumlichen Eindruck des Objektes aus einer Beobachtungsrichtung, die für jedes dieser Paare vorbestimmt ist.

Schliesslich können die N Darstellungen 3, die den N Betrachtungsrichtungen 15 entsprechen, eine zeitliche Abfolge von Situationen beinhalten. Der Betrachter sieht beim Drehen des Flächenmusters eine zeitlich ablaufende Handlung, wobei nacheinander die der Betrachtungsrichtung 15 entsprechende Darstellung 3 für ihn sichtbar ist.

Als graphische Darstellung 3 dient vorteilhaft eine gerasterte Schwarz-Weiss-Photographie eines Objektes, wobei die einzelnen Pixel einen Helligkeitswert von wenigstens zwei Stufen aufweisen.

Die N Darstellungen 3 des Flächenmusters können auch aus den vorhergehend aufgeführten Beispielen zusammengesetzt werden. Dabei kann auch Bild und Text gemischt werden. Die Grenzen sind nur durch die technisch mögliche Auflösung in M x N Flächenanteilen 7 bei einer vorgegebenen Spatialfrequenz gegeben.

Die vorstehend erwähnte Richtung des einfallenden Lichtes 10 und die erwähnten Betrachtungsrichtungen 15 beziehen sich auf ein durch das Flächenmuster definiertes Koordinatensystem, wobei die Parameter der Reliefstrukturen 9 der entsprechenden Pixel jeweils für eine feste Richtung des einfallenden Lichtes 10 so gewählt werden, dass ein Betrachter, der seine Augen um ein räumlich fixiertes Flachenmuster herum bewegt, die beschriebenen Aenderungen wahrnimmt.

In einer anderen Ausführung bewirken die vorbestimmten Parameter der Reliefstrukturen 9, dass die N Darstellungen 3 auch bei einer räumlich fixierten Richtung des einfallenden Lichtes 10 und einem unbeweglichen Betrachter nacheinander sichtbar werden, wenn die Ebene des Flächenmusters durch Kippen um eine ihrer Achsen bewegt wird. Dabei ändern sich die Richtung des einfallenden Lichtes 10 und die Betrachtungsrichtung 15 gleichzeitig bezüglich des durch das Flächenmuster festgelegten Koordinatensystems.

Zwei besonders auffällige Folgen der nacheinander sichtbaren N Darstellungen 3 bei der Verkippung der Vertikalachse der Ebene des Flächenmusters sind beispielhaft erwähnt:
- Die Perspektive der Objektansicht ändert sich beim Verkippen nicht.
- Die Perspektive ändert sich so, wie wenn das Objekt mit dem Flächenmuster mitdrehen würde.

Die Herstellung des Flächenmusters erfolgt beispielsweise in den nachstehend beschriebenen Schritten.

Zunächst werden die N Darstellungen 3 beispielsweise mit Hilfe optischer Mittel auf die vorbestimmten Abmessungen gebracht und in gleich grosse Pixel eingeteilt. Für jeden Pixel wird der Farbwert und die Stufe des Helligkeitswertes bestimmt. Anschliessend wird für jede Darstellung 3 die vorgesehene Betrachtungsrichtung 15 festgelegt.

Diese Informationen bestimmen die Parameter der Reliefstruktur 9, die relative Grösse des Beugungselementes 8 und damit die Grösse des Flächenteils 19 für jeden Feldanteil 7 in jedem Rasterfeld 6.

Eine Masterstruktur für den Prägestempel des Flächenmusters ist auf der in der CH-Anmeldung 00805/88-4 beschriebenen Apparatur herstellbar. Die beiden Parameter der Reliefstruktur 9, die Spatialfrequenz und die Profilform, bestimmen einen Matrizentyp zum Abformen der Beugungsfläche 18 auf ein Flächenelement einer thermoplastischen Deckschicht mittels der Apparatur. Der dritte Parameter legt die Orientierungsrichtung 14 bzw. den Azimutwinkel Φ fest, um den die Matrize vor dem Abformen gedreht werden muss. Von dieser Apparatur vorzunehmende Schritte zur Herstellung der Masterstruktur des Flächenmusters sind durch eine digitale Steuerung kontrollierbar.

Die Mattstruktur der Flächenteile 19 kann von einer speziellen Matrize wie eine der Reliefstrukturen 9 auf die Deckschicht abgeformt werden.

Diese Arbeit wird vorteilhaft mittels eines Computer-Programmes zur Gestaltung des Flächenmusters durchgeführt.

Es ist auch möglich zuerst die Mattstruktur auf die Oberfläche der Deckschicht abzuformen, wobei dies in der Apparatur gemäss der CH-Anmeldung 00805/88-4 oder in einem vorhergehenden, separaten Arbeitsgang mittels Prägewalzen erfolgt. Anschliessend wird die Oberfläche der Deckschicht für jede Beugungsfläche 18 mit der entsprechenden Matrize umgeprägt.

Von der Masterstruktur werden in bekannter Weise (CH-PS 594 936) galvanisch erzeugte Negative für die Prägestempel angefertigt und die Flächenmuster geprägt und ausgerüstet.

## Patentansprüche

1. Optisch variables Flächenmuster mit einer graphisch gestalteten Darstellung, das in M Rasterfelder eingeteilt ist, die optisch aktive Beugungselemente mit einer Spatialfrequenz von mehr als 10 Linien pro mm enthalten, dadurch gekennzeichnet, dass jedes Rasterfeld (6) eine grösste Abmessung von weniger als 0,3 mm und eine Einteilung in N Feldanteile (7a bis 7f) mit je einem Beugungselement (8) aufweist, wobei jedes Beugungselement (8) einem vorbestimmten Pixel einer von N Darstellungen (3) entspricht, un dass die Parameter einer Reliefstruktur (9) in jedem der N Beugungselemente (8) durch die Zugehörigkeit zu einer Teilflache (2) vorbestimmt sind, so dass jede der N Darstellungen (3) unter einer vorbestimmten Betrachtungsrichtung (15) des Flächenmusters sichtbar ist, wobei sowohl M als auch N grösser als 1 sind.

2. Flächenmuster nach Anspruch 1, dadurch gekennzeichnet, dass wenigstens ein Reliefprofil der Beugungselemente (8) asymmetrisch ist und dass der Azimutwinkel (Φ) jedes der N Beugungselemente (8) einen vorbestimmten Wert aus dem Bereich 0° bis 360° aufweist.

3. Flächenmuster nach Anspruch 1 oder 2, dadurch gekennzeichnet, dass die Form der Rasterfelder (6) ein regelmässiges Vieleck ist und dass das Vieleck eine grösste Diagonale von höchstens 0,3 mm aufweist.

4. Flächenmuster nach einem der Ansprüche 1 bis 3, dadurch gekennzeichnet dass die relative Grösse der Beugungsfläche (18) jedes der N Beugungselemente (8) im Rasterfeld (6) der relativen, vorbestimmten Helligkeit des Rasterfeldes (6) für jede der N Darstellungen (3) entspricht.

5. Flächenmuster nach einem der Ansprüche 1 bis 3, dadurch gekennzeichnet dass der relative Beugungswirkungsgrad jedes der N Beugungselemente (8) im Rasterfeld (6) der relativen, vorbestimmten Helligkeit des Rasterfeldes (6) für jede der N Darstellungen (3) entspricht.

6. Flächenmuster nach Anspruch 4 oder 5, dadurch gekennzeichnet, dass jedes Rasterfeld (6) N gleich grosse Feldanteile (7a bis 7f) aufweist.

7. Flächenmuster nach Anspruch 6, dadurch gekennzeichnet, dass in jedem Feldanteil (7a bis 7f) ein vom Beugungselement (8) nicht beanspruchter Flächenanteil (19) eine Mattstruktur aufweist.

8. Flächenmuster nach einem der Ansprüche 4 bis 7, dadurch gekennzeichnet dass die N graphisch gestalteten Darstellungen (3) Ansichten eines gleichen Objektes unter verschiedenen vorbestimmten Perspektiven des Objektes sind.

9. Flächenmuster nach einem der Ansprüche 4 bis 7, dadurch gekennzeichnet dass die N graphisch gestalteten Darstellungen (3) Ansichten eines gleichen Objektes unter einer vorbestimmten Perspektive des Objektes bei verschiedenen vorbestimmten Beleuchtungsrichtungen des Objektes sind.

10. Flächenmuster nach einem der Ansprüche 4 bis 7, dadurch gekennzeichnet dass die N Darstellungen (3) gerasterte Photographien sind und dass die Pixel der Teilflächen (2) wenigstens zwei Stufen des Helligkeitswertes aufweisen.

11. Flächenmuster nach einem der Ansprüche 4 bis 8, dadurch gekennzeichnet dass N geradzahlig ist, dass die Darstellungen (3) wenigstens ein stereoskopisches Paar des gleichen Objektes sind, so dass dem unbewaffneten Auge wenigstens eine räumliche Ansicht oes Objektes erscheint.

12. Flächenmuster nach einem der vorangehenden Ansprüche, dadurch gekennzeichnet, dass das Flächenmuster nur ein Teil eines grösseren graphisch gestalteten Motivs ist und dass eine Begrenzung (1) des Flächenmusters wenigstens teilweise von einem in einer anderen Technik erstellten Motiv umgeben ist.

13. Flächenmuster nach einem der vorangehenden Ansprüche, dadurch gekennzeichnet, dass ein Träger (4), in den das Flächenmuster eingeprägt ist, auf der nichtgeprägten Seite eine Klebeschicht (11) aufweist.

## Claims

1. An optically variable surface pattern with a representation of graphic configuration which is divided up into M grid areas which contain optically active diffraction elements with a spatial frequency of more than 10 lines per mm, characterised in that each grid area (6) has a maximum dimension of less than 0.3 mm and a division into N area portions (7a to 7f) each having a diffraction element (8), wherein each diffraction element (8) corresponds to a predetermined pixel of one of N representations (3), and that the parameters of a relief structure (9) in each of the N diffraction elements (8) are predetermined by belonging to a surface portion (2), so that each of the N representations (3) is visible from a predetermined direction of observation (15) of the surface pattern, wherein both M and N are greater than 1.

2. A surface pattern according to Claim 1, characterised in that at least one relief profile of the diffraction elements (8) is asymmetrical, and that the azimuth angle (Φ) of each of the N diffraction elements (80) has a predetermined value in the range 0° to 360°.

3. A surface pattern according to Claim 1 or 2, characterised in that the shape of the grid areas (6) is a regular polygon, and that the largest diagonal line of the polygon is a maximum of 0.3 mm.

4. A surface pattern according to one of Claims 1 to 3, characterised in that the relative size of the diffraction surface area (18) of each of the N diffraction elements (8) in the grid area (6) corresponds to the relative, predetermined brightness of the grid area (6) for each of the N representations (3).

5. A surface pattern according to one of Claims 1 to 3, characterised in that the relative diffraction efficiency of each of the N diffraction elements (8) in the grid area (6) corresponds to the relative predetermined brightness of the grid area (6) for each of the N representations.

6. A surface pattern according to Claim 4 or Claim 5, characterised in that each grid area (6) has N area portions (7a to 7f) of equal size.

7. A surface pattern according to Claim 6, characterised in that in each area portion (7a to 7f) a surface portion (19) not occupied by the diffraction element (8) has a matt structure.

8. A surface pattern according to one of Claims 4 to 7, characterised in that the N representations (3) of graphic configuration are views of one and the same object from various predetermined perspectives of the object.

9. A surface pattern according to one of Claims 4 to 7, characterised in that the N representations (3) of graphic configuration are views of one and the same object from a predetermined perspective of the object with different predetermined directions of illumination of the object.

10. A surface pattern according to one of Claims 4 to 7, characterised in that the N representations (3) are photographs put into grid form, and that tie pixels of the surface portions (2) have at least two stages of brightness value.

11. A surface pattern according to one of Claims 4 to 8, characterised in that N is an even number and that the representations (3) are at least one stereoscopic pair of the same object, so that at least one three-dimensional view of the object is visible to the naked eye.

12. A surface pattern according to one of the preceding claims, characterised in that the surface pattern is only a part of a larger motif of graphic configuration, and that a boundary (1) of the surface pattern is at least partially surrounded by a motif which is produced using a different technique.

13. A surface pattern according to one of the preceding claims, characterised in that a carrier (4), into which the surface pattern is embossed, has an adhesive layer (11) on the non-embossed side.

## Revendications

1. Dessin plat optiquement variable possédant une représentation graphique, qui est divisée en M zones de réseau qui renferment des éléments diffracteurs optiquement actifs possédant une fréquence spatiale de plus de 10 lignes par mm, caractérisé en ce que chaque zone de réseau (6) possède une dimension maximale de moins de 0,3 mm et une subdivision en N éléments de zone (7a à 7f) possédant chacun un élément diffracteur (8), chaque élément diffracteur (8) correspondant à un pixel prédéterminé d'une des N représentations (3), et en ce que les paramètres d'une structure en relief (9) sont prédéterminées dans chacun des N éléments diffracteurs (8) par leur appartenance à une surface partielle (2), de telle manière que chacune des N représentations (3) soit visible dans une direction d'observation (15) prédéterminée du dessin plat, M et N étant tous deux supérieurs à 1.

2. Dessin plat selon la revendication 1, caractérisé en ce qu'au moins un profil de relief des éléments diffracteurs (8) est asymétrique ,et en ce que l'angle d'azimut (Φ) de chacun des N éléments diffracteurs (8) présente une valeur prédéterminée, comprise dans l'intervalle de 0 à 360°.

3. Dessin plat selon la revendication 1 ou 2, caractérisé en ce que la forme des zones de réseau (6) est un polygone régulier, et en ce que le polygone possède une grande diagonale de 0,3 mm au maximum.

4. Dessin plat selon une des revendications 1 à 3, caractérisé en ce que la dimension relative de la surface de diffraction (19) de chacun des N éléments diffracteurs (8) de la zone de réseau (6) correspond à la luminosité relative prédéterminée de la zone de réseau (6) pour chacune des N représentations (3).

5. Dessin plat selon une des revendications 1 à 3, caractérisé en ce que l'efficacité de diffraction relative de chacun des N éléments diffracteurs (8) de la zone de réseau (6) correspond à la luminosité relative prédéterminée de la zone de réseau (6) correspondant à chacune des N représentations (3).

6. Dessin plat selon la revendication 4 ou 5, caractérisé en ce que chaque zone de réseau (6) présente tu éléments de zone (7a à 7f) de même dimension.

7. Dessin plat selon la revendication 6, caractérisé en ce que, dans chaque élément de zone (7a à 7f), un élément de surface (19) qui n'est pas occupé par l'élément diffracteur (8) présente une structure mate.

8. Dessin plat selon une des revendications 4 à 7, caractérisé en ce que les tu représentations graphiques (3) sont des vues d'un même objet prises dans différentes perspectives prédéterminées de l'objet.

9. Dessin plat selon une des revendications 4 à 7, caractérisé en ce que les N représentations graphiques (3) sont des vues d'un même objet prises dans une perspective prédéterminée de l'objet sous différentes directions d'éclairage prédéterminées de l'objet.

10. Dessin plat selon une des revendications 4 à 7, caractérisé en ce que les N représentations (3) sont des photographies tramées et les pixels des surfaces partielles (2) présentent au moins deux échelons de luminosité.

11. Dessin plat selon une des revendications 4 à 8, caractérisé en ce que N est un nombre pair, en ce que les représentations (3) sont au moins une paire stéréoroscopique d'un même objet, de sorte que, à l'oeil nu, on voit au moins une vue en relief de l'objet.

12. Dessin plat selon une des revendications précédentes, caractérisé en ce que le dessin plat ne constitue qu'une partie d'un plus grand motif graphique, et en ce qu'une limitation (1) du dessin plat est entourée au moins partiellement d'un motif formé par une autre technique.

13. Dessin plat selon une des revendications précédentes, caractérisé en ce qu'un support (4), dans lequel le dessin de surface est gaufré,présente une couche de colle (11) sur la face non gaufrée.
